# EUROPÄISCHE PATENTSCHRIFT

(11) **EP 2 222 531 B1**
(45) Veröffentlichungstag und Bekanntmachung des Hinweises auf die Patenterteilung: **09.11.2011**
(21) Anmeldenummer: 08860378.2
(22) Anmeldetag: 12.12.2008
(51) Int. Cl.: B62D 5/083, B62D 5/087

(54) **SERVOVENTIL FÜR EINE HYDRAULISCHE SERVOLENKUNG**
SERVO VALVE FOR A HYDRAULIC POWER-ASSISTED STEERING SYSTEM
SERVOVALVE POUR UNE DIRECTION ASSISTEE HYDRAULIQUE

(30) Priorität: 13.12.2007 DE 102007060553
(43) Veröffentlichungstag der Anmeldung: 01.09.2010
(73) Patentinhaber: Ford Global Technologies, LLC, Dearborn, MI 48126 (US)
(72) Erfinder: OLIVERI, Salvatore, 56341 Filsen (DE); KOGAN, Alexander, 51105 Köln (DE); KELLER, Jens, 42655 Solingen (DE); JANZ, Bernd, 42653 Solingen (DE)
(74) Vertreter: Bauer Vorberg Kayser Patentanwälte
(86) Internationale Anmeldenummer: PCT/EP2008/067448
(87) Internationale Veröffentlichungsnummer: WO 2009/074680

(56) Entgegenhaltungen:
- EP-A- 2 014 538
- DE-U1-202005 018 390
- JP-A- 2007 261 506

## Beschreibung

Die vorliegende Erfindung betrifft ein Servoventil für eine hydraulische Servolenkung von Kraftfahrzeugen nach dem Oberbegriff des Patentanspruchs 1.

Servoventile sind unter anderem als Drehservoventile bekannt und werden standardmäßig in hydraulischen Servolenkungen eingesetzt. Diese regeln den Hydraulikdruck und damit die Lenkunterstützung auf einem Unterstützungszylinder abhängig vom anliegenden Lenkmoment des Fahrers. Es kommen meist Drehservoventile zum Einsatz, bei denen sich eine Eingangswelle, die über eine Lenksäule mit einem Lenkrad verbunden ist, relativ zu einer Steuerhülse verdreht, die mit der Ausgangswelle und bei Zahnstangenlenkungen mit einem Lenkritzel verbunden ist. Durch ein Torsionssystem zwischen Eingangswelle und Steuerhülse wird ein drehmomentabhängiger Verdrehwinkel des Ventils und damit eine mit eine drehmomentabhängige Ventilcharakteristik realisiert. Die Verdrehung der Eingangswelle relativ zur Steuerhülse dient also der Festlegung der für die Lenkung benötigten Hilfskraft.

Drehservoventile für Hilfskraftlenkungen enthalten normalerweise zwei Ventilelemente, die koaxial ineinander begrenzt beweglich und zum Erzielen eines Steuerweges begrenzt zueinander verdrehbar angeordnet sind. Die Eingangswelle kann demnach mit einem ersten Ventilelement verbunden sein, das als radial innenliegender Drehschieber ausgebildet ist. Die Steuerhülse umgibt dieses erste Ventilelement, sie ist radial außenliegend angeordnet. Beide Ventilelemente weisen axial verlaufende Steuernuten auf, die zur Steuerung eines Druckmittels von oder zu Arbeitsräumen eines hydraulischen Stellaggregats bzw. Servomotors dienen. Die Steuernuten können aber auch unmittelbar auf der Eingangswelle angeordnet sein.

Derartige Drehschieber werden beispielsweise in der DE 10 2004 034 026 A1, der DE 692 08 261 T2 und der DE 197 55 633 A1 beschrieben.

Die DE 20 2005 018390 U1 beschreibt eine Ventilvorrichtung für eine hydraulische Servolenkung mit zwei Ventilelementen, die zur Überlagerung eines zusätzlichen Lenkmomentes zueinander verdrehbar sind. Die Ventilvorrichtung ist relativ aufwändig aufgebaut und eignet sich nicht für eine externe Kraftankopplung.

Ein Nachteil der bekannten Servoventile besteht somit darin, dass mit ihnen bestimmte Funktionalitäten, die elektrisch unterstütze Servolenkungen aufweisen, mit hydraulisch unterstützten Servolenkungen nicht umsetzbar sind. Dies gilt beispielsweise für Funktionen, bei denen das Lenkmoment nicht vom Fahrer, sondern von einem elektrischen Motor aufgebracht wird. Eine solche Funktionalität ist beispielsweise für eine Realisierung von Einparkhilfen, bei denen das Fahrzeug automatisch und ohne Aufbringen von Lenkmoment durch den Fahrer eingeparkt wird. Das Aufbringen von Lenkmoment ist bei einem hydraulisch unterstützten System mit den beschriebenen Drehschiebern kaum oder nur mit erheblichem Aufwand möglich. Eine sehr aufwändig aufgebaute Lösung für eine externe Kraftankopplung beschreibt beispielsweise die Druckschrift JP 2007 261506. Diese Lösung benötigt aber zahlreiche Bauteile, deren Fertigung schwierig und kostenintensiv ist.

Die Aufgabe der vorliegenden Erfindung besteht darin, ein Servoventil für eine hydraulische Servolenkung eines Kraftfahrzeugs, mit dem die Nachteile aus dem Stand der Technik überwunden werden können. Insbesondere soll das Servoventil auch kostengünstig herstellbar sein und gegenüber den bekannten Drehservoventilen weitere Funktionalitäten, wie beispielsweise das Aufbringen eines elektrisch gesteuerten Lenkmoments, ermöglichen.

Erfindungsgemäß wird die Aufgabe durch ein Servoventil mit den Merkmalen des Patentanspruchs 1 gelöst.

Die Position der Steuer- und der Koppelhülse zueinander in axialer Richtung kann durch verschiedene geeignete Anordnungen ermöglicht werden, wobei im Folgenden nur beispielhaft eine praktikable und kostengünstig herstellbare Ausführungsform beschrieben wird.

Bei der bevorzugten Ausführungsform ist die äußere Steuerhülse in axialer Richtung fest mit einer Ausgangswelle verbunden, also nicht verschiebbar. Das innere Steuerelement ist durch einen Drehschieber gebildet. Die Koppelhülse ist zumindest bereichsweise zwischen der äußeren Steuerhülse und dem Drehschieber angeordnet und drehfest mit der äußeren Steuerhülse verbunden, so dass eine Verdrehung der Koppelhülse eine Verdrehung der äußeren Steuerhülse bewirkt. Der Drehschieber ist mit der äußeren Steuerhülse selbstzentrierend verbunden, beispielsweise federnd mittels eines Torsionsstabes. Über die Koppelhülse ist die Mittelstellung des Drehschiebers und der äußeren Steuerhülse verstellbar. Die Verstellung erfolgt extern angetrieben, vorzugsweise elektromotorisch. Ein hydraulischer Antrieb ist ebenfalls möglich, dann ist ein Teil der Koppelhülse als Kolben ausgeführt. Um die axiale Verschiebung der Koppelhülse in eine relative Drehbewegung zwischen dem inneren Drehschieber und der äußeren Steuerhülse umzuwandeln, befinden sich entsprechende Nuten/Bolzen-Kombinationen in allen betroffenen Bauteilen.

Ein wesentlicher Erfindungsgedanke besteht darin, eine axiale Bewegung beispielsweise durch Anordnung einer Schrägnut in eine Bewegung in Umfangsrichtung bzw. eine Drehbewegung umzuwandeln. Durch die Schrägnut erstreckt sich ein Druckelement bzw. ein Bolzen, der fest mit der Ausgangswelle verbunden ist.

Wird also die Koppelhülse axial verschoben, stützt sie sich auf dem Bolzen ab und wird gegenüber diesem relativ verdreht. Die Verdrehung der Koppelhülse wird dabei über eine in axialer Richtung verlaufende Längsnut, in die ein fest mit der äußeren Steuerhülse verbundenes Führungselement hineinragt, auf die äußere Steuerhülse übertragen. Die Koppelhülse verdreht sich somit wenn sie in axialer Richtung verschoben wird. Die Koppelhülse befindet sich dabei nur bereichsweise zwischen der äußeren Steuerhülse und dem Drehschieber, um die auf den beiden Bauteilen vorhandenen Steuernuten nicht zu verdecken.

Im Stand der Technik ist die Ausgangswelle fest mit der äußeren Steuerhülse verstiftet, wohingegen die Erfindung vorschlägt, eine Koppelhülse zur Übertragung der Kräfte sozusagen zwischenzuschalten.

Erfindungsgemäß ist das innere Steuerelement durch die Koppelhülse selbst gebildet, die auf ihrer Außenfläche die zweiten Steuernuten aufweist. Die Steuernuten verlaufen im Wesentlichen in umlaufender Richtung um die Längsachse. Der Vorteil umlaufender Steuernuten besteht in erster Linie darin, dass sie in einem Drehprozess deutlich einfacher und kostengünstiger herstellbar sind. In der Koppelhülse ist eine Schrägnut vorgesehen, in die ein Druckelement hineinragt. Dieses ist aber nicht mit der Ausgangswelle, sondern fest mit der Eingangswelle verbunden. Wird nun die Koppelhülse in axialer Richtung extern angetrieben verschoben, übt das Druckelement über die Schrägnut eine Kraft auf die Eingangswelle aus, wodurch sich diese verdreht. Um eine exakte Bewegung der Koppelhülse zu gewährleisten, weist die Koppelhülse eine weitere Nut auf, die in axialer Richtung verläuft und in die ein Führungselement der äußeren Steuerhülse, beispielsweise ein Bolzen, hineinragt. Die Koppelhülse wird dadurch sicher und ausgesprochen exakt zur äußeren Steuerhülse geführt. Aufgrund der hohen notwendigen Kräfte zum Verschieben der Koppelhülse eignet sich diese Variante insbesondere für Funktionen, bei denen das Lenkrad frei drehen kann, also beispielsweise für automatisches Parkieren. Die Ausführungsform sollte ein nicht selbsthemmendes Getriebe aufweisen. Denkbar ist ein elektromotorischer Antrieb für die Koppelhülse, der im Normalfall, also während des normalen Fahrens, stromlos ist.

Die Steigung der Schrägnut kann durch einen Steigungswinkel α beschrieben werden, der sich auf die Längsachse des Servoventils bezieht. Der Steigungswinkel beträgt beispielsweise zwischen 10 und 45° betragen, ist jedoch beliebig und insbesondere in Anpassung an die entsprechenden Rahmenbedingungen frei zu wählen. Er sollte aber nicht größer als 45° sein, um eine Selbsthemmung der bewegten Teile zu verhindern.

Das erfindungsgemäße Servoventil eignet sich ausgesprochen gut für das Erzeugen einer Lenkbewegung unmittelbar auf den Lenkungsstrang ohne Nutzung des Lenkrads. Es ist lediglich notwendig, die Koppelhülse in axialer Richtung zu verschieben. Beispielsweise kann zwischen dem Antrieb und der Koppelhülse ein Hebel zur Verstellung vorgesehen sein. Je nach Position des Antriebs (z.B. elektromotorisch, hydraulisch, elektromagnetisch) sind auch andere Verbindungsformen denkbar.

In einer besonders vorteilhaften Variante ist der Hebel zwischen dem Elektromotor und der Koppelhülse nach Art einer Wippe gelagert, wodurch entsprechende Hebelwirkungen ausgenutzt werden können. Der Hebel kann einseitig an der Koppelhülse angelenkt sein, denkbar und vorteilhaft ist aber auch eine gabelförmige Ausführung des Hebels, wodurch er z.B. diametral gegenüberliegend an zwei Punkten der Koppelhülse angreift. Die freien Enden der Gabel sind dabei vorteilhafterweise in einer umlaufenden Nut der Koppelhülse leichtgängig geführt, wodurch die Drehbewegung der Koppelhülse ermöglicht wird.

Um eine Absicherung für den Fehlerfall zu gewährleisten, kann erfindungsgemäß ein federbelastetes Vier-/Zweiwegeventil vorgesehen sein. Fehlerfall bedeutet hier, dass der Fahrer ein Lenkmoment bei Geradeausfahrt aufbringen muss (Lenkung "zieht" unkontrolliert in eine Richtung). Ein solcher Fehler wird ausgelöst durch eine nicht mehr in die Mittellage zurückgestellte Verdrehung der Ventilelemente. Dies wiederum kann durch einen Wegfall der Bordspannung, einen Regelfehler der Steuerelektronik oder einen mechanischen Fehler, der im ungünstigsten Fall nicht automatisch erkannt werden kann ausgelöst werden.

Fällt die Bordspannung weg, stellt sich bei Verwendung eines Vier-/Zweiwegeventils das Hydraulikventil selbständig aufgrund einer integrierten Feder in die Grundstellung zurück. Beim Regelfehler der Steuerelektronik sollte durch eine parallel arbeitende Auswerteelektronik das Hydraulikventil ausgelöst werden, dies kann beispielsweise dadurch erfolgen, dass diese spannungsfrei geschaltet wird. Bei mechanischen Fehlern muss ein Auslösen des Hydraulikventils per Schalter manuell erfolgen. Diese Lösung ist insbesondere bei der Prototypenentwicklung relevant, wobei auch in diesem Fall spannungsfrei geschaltet werden kann.

Wenn das Hydraulikventil spannungsfrei geschaltet ist, erfolgt eine hydraulische Entkopplung der Lenkventilausgänge vom Lenkzylinder. Somit ist eine Weiterfahrt ohne Lenkunterstützung mit neutralem Lenkdrehmoment möglich. Dies entspricht einem Lenkgefühl einer manuellen Lenkung ohne hydraulische Unterstützung.

In einer besonders vorteilhaften Ausführungsvariante kann die Koppelhülse elektromagnetisch verschoben werden. In diesem Fall ist die Eingangswelle bzw. Koppelhülse von einem Dauermagneten umgeben, weiterhin sind ringförmig Elektromagneten angeordnet. Durch Bestromen der Elektromagneten kann eine Verschiebung der Koppelhülse in axialer Richtung bewirkt werden.

Anhand der nachfolgenden Figurenbeschreibung wird die Erfindung näher erläutert, wobei nochmals darauf hingewiesen wird, dass es sich dabei lediglich um eine vorteilhafte Ausführungsvariante handelt. Es zeigen:
- Fig. 1:: ein Servoventil in Seitenansicht,
- Fig. 2:: eine zweite Ansicht des Servoventils aus Figur 1,
- Fig. 3:: eine weitere Ansicht eines Bereichs des Servoventils aus Figur 1,
- Fig. 4:: das Servoventil im Schnitt,
- Fig. 5:: eine erste Ausschnittvergrößerung des Servoventils im Schnitt,
- Fig. 6:: eine zweite Ausschnittvergrößerung des Servoventils im Schnitt,
- Fig. 7:: eine dritte Ausschnittvergrößerung des Servoventils im Schnitt,
- Fig. 8:: das Servoventil im Querschnitt,
- Fig. 9:: das erfindungsgemäße Servoventil im Schnitt,
- Fig. 10:: das erfindungsgemäße Servoventil gemäß Fig. 9 in Ansicht A ohne äußere Steuerhülse,
- Fig. 11:: das erfindungsgemäße Servoventil gemäß Fig. 9 in Ansicht B ohne äußere Steuerhülse,
- Fig. 12:: eine Ausschnittvergrößerung (C) aus Figur 9 zur Verdeutlichung von Steuernuten und Steuerkanten,
- Fig. 13:: Ventilanordnung für das erfindungsgemäße Servoventil,
- Fig. 14:: eine dritte erfindungsgemäße Ausführungsvariante des Servoventils im Schnitt,
- Fig. 15:: die Ausführungsvariante aus Fig. 14 im Querschnitt.

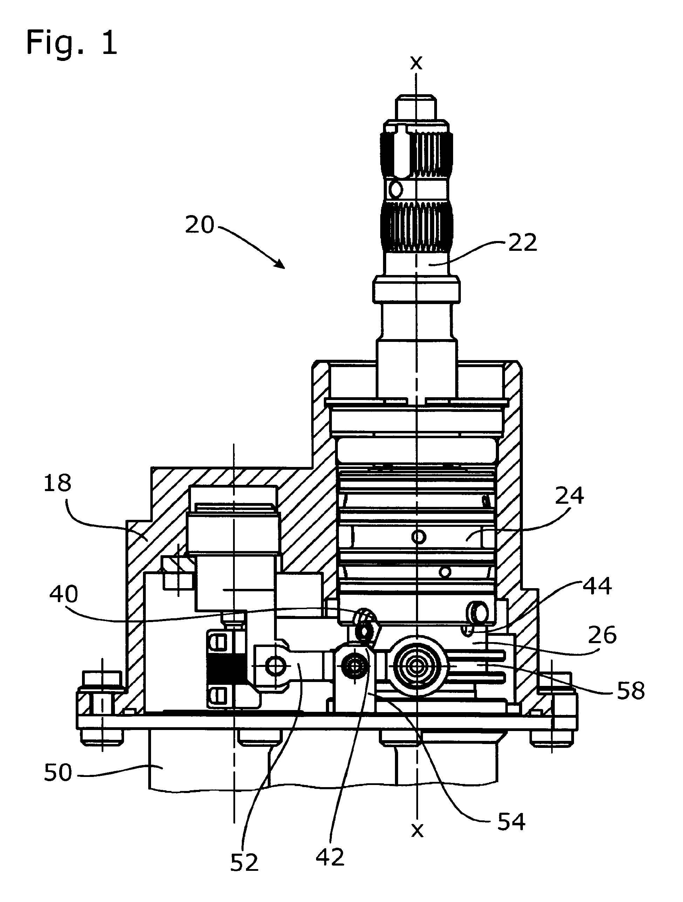

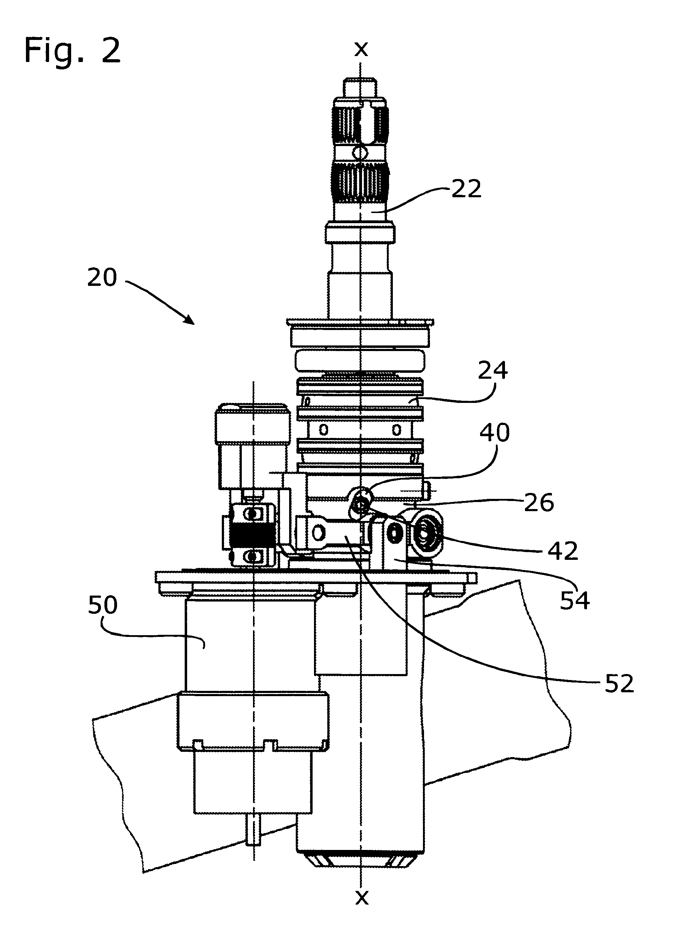

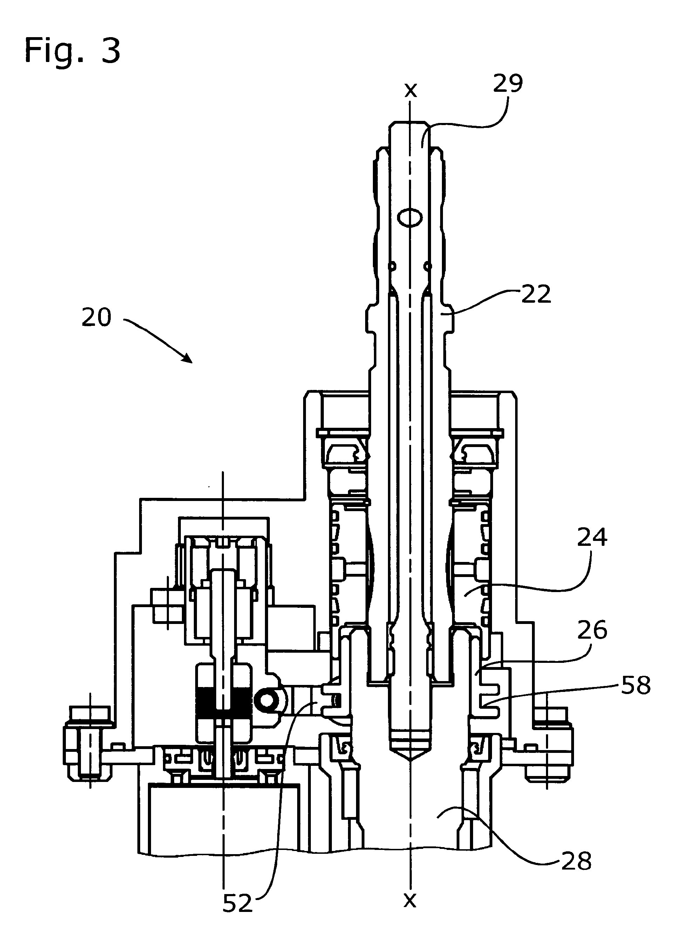

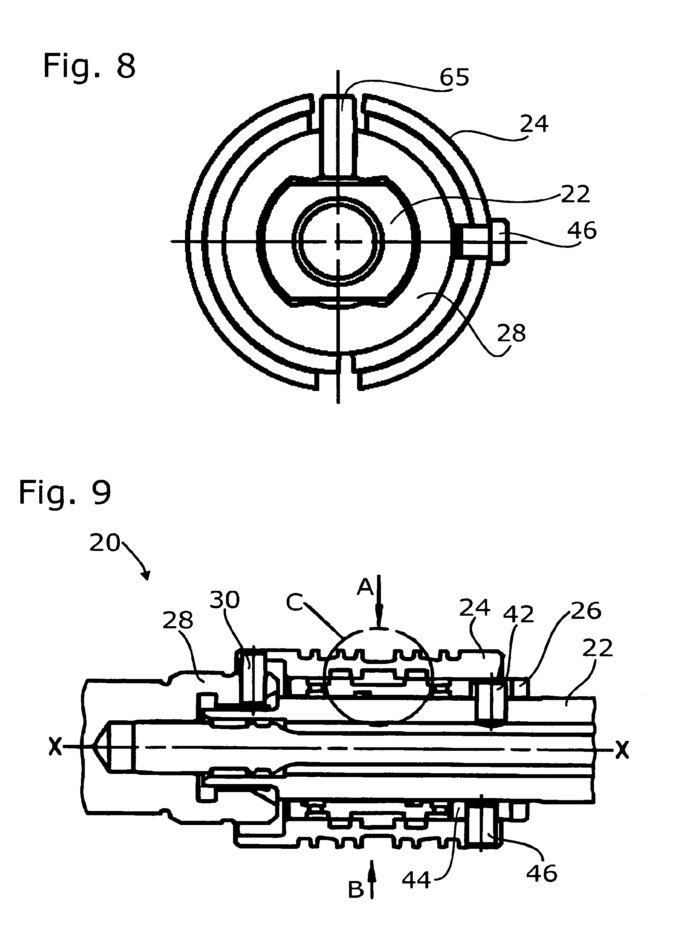

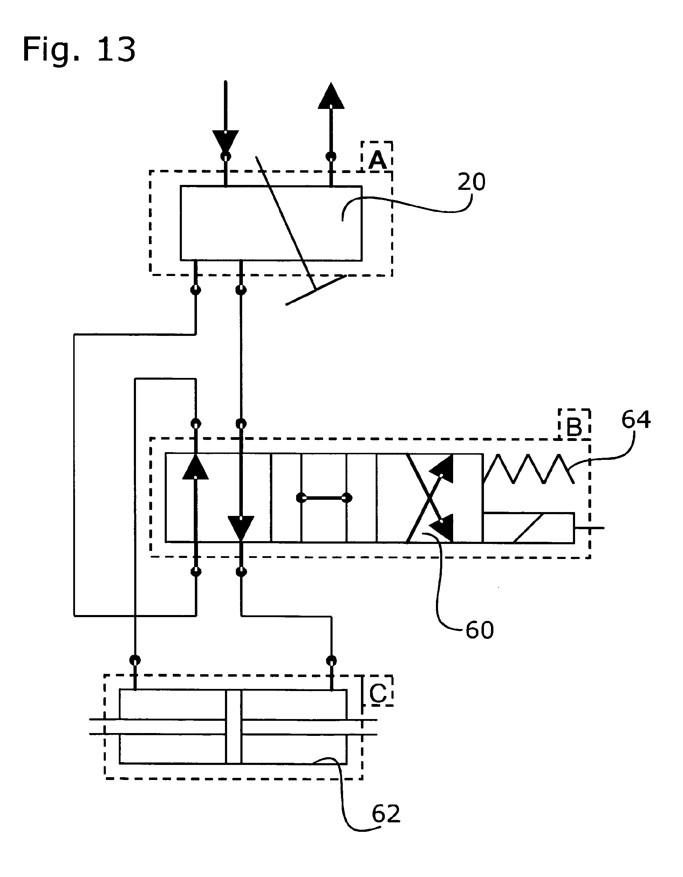

Zum besseren Verständnis der eigentlichen Erfindung, die in den Figuren 9 bis 15 detailliert beschrieben wird, zeigen die Figuren 1 bis 8 zunächst ein Servoventil 20, das zwischen einer Eingangswelle 22 und einer äußeren Steuerhülse 24 eine zusätzliche Koppelhülse 26 aufweist. Die äußere Steuerhülse 24 und die Koppelhülse 26 sind röhrenförmig ausgeführt, wobei sich die Koppelhülse 26 im Wesentlichen innerhalb der äußeren Steuerhülse 24 befindet. Die Eingangswelle 22 ist über eine nicht gezeigte Lenksäule mit einem Lenkrad verbunden, die äußere Steuerhülse 24 ist dagegen über einen Torsionsstab 29 drehfest an einer Ausgangswelle 28 befestigt. Die Ausgangswelle 28 ist wiederum mittelbar mit zu drehenden Rädern verbunden. Die Figuren 1 und 2 zeigen verschiedene Ansichten des Servoventils 20, wobei nur in Fig. 1 ein Gehäuse 27 im Schnitt dargestellt ist.

Der Torsionsstab 29 ist größtenteils von der Eingangswelle 22 umgeben. Die Eingangswelle 22 wirkt als inneres Steuerelement im Sinne der Erfindung, die Eingangswelle 22 und das innere Steuerelement sind also durch nur ein Bauteil realisiert.

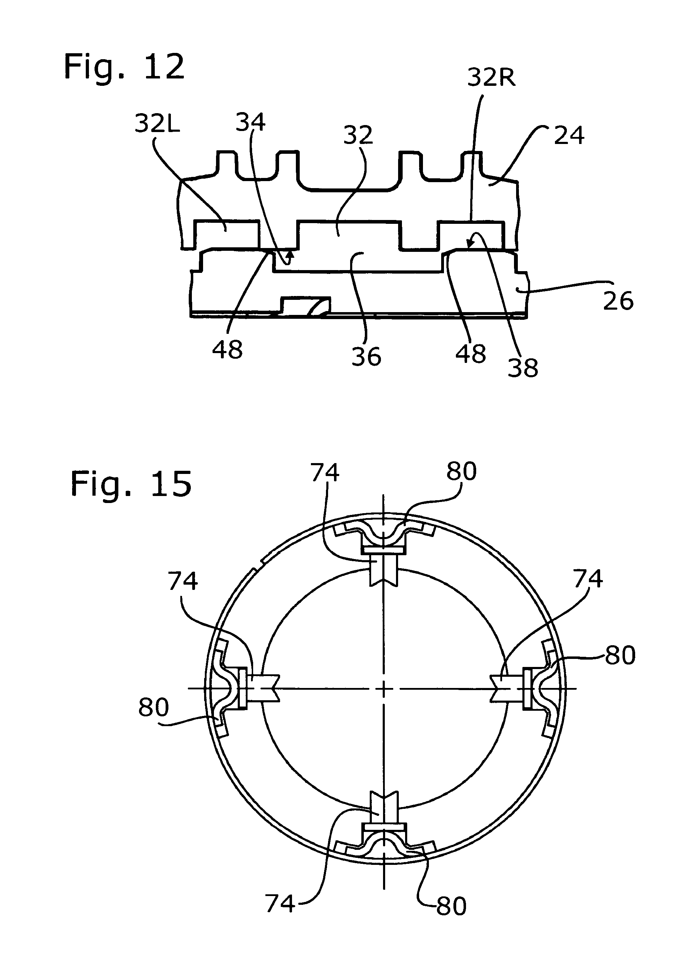

Die Koppelhülse 26 ist in axialer Richtung entlang einer Längsachse X-X des Servoventils 20 bewegbar. Somit können erste Steuernuten 32, die in eine Innenfläche 34 der äußeren Steuerhülse 24 eingelassen sind, mit zweiten Steuernuten 36, die in eine Außenfläche des inneren Steuerelementes eingelassen sind, in oder außer Deckung gebracht werden. Je nach Position der Steuernuten 32, 36 zueinander wird eine Druckdifferenz erzeugt, die eine Lenkkraftunterstützung bewirkt (vgl. auch Fig. 12).

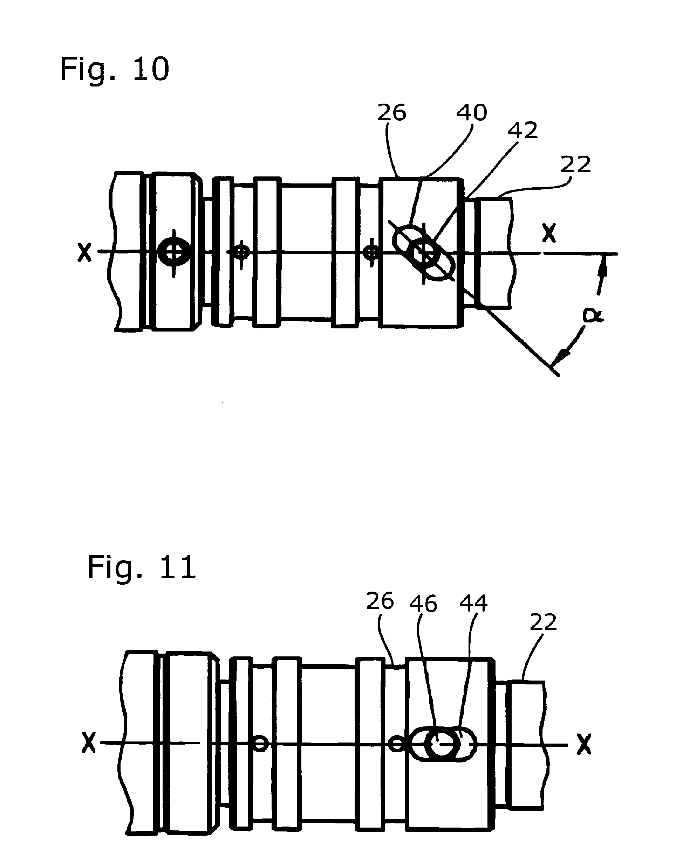

Die Koppelhülse 26 weist eine Schrägnut 40 auf, in die ein Druckelement 42 hineinragt, vorzugsweise ein Bolzen, der mit der Ausganswelle 22 verbunden ist (vgl. insbesondere Fig. 2 und Fig. 8). Die Schrägnut 40 weist eine Steigungswinkel α auf (siehe auch Fig. 10). Wird die die Koppelhülse 26 axial verschoben, stützt sie sich auf dem Druckelement 40 ab und wird dadurch um die Längsachse X-X verdreht.

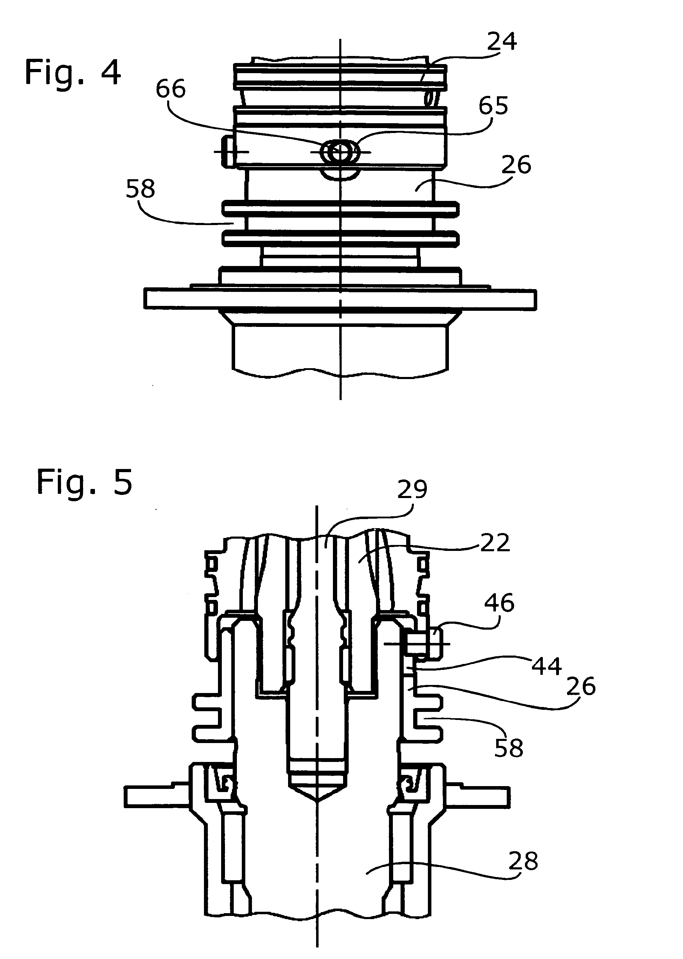

Über eine axial verlaufende Längsnut 44, durch die sich zu diesem Zweck ein Führungselement 46 erstreckt, das fest mit der äußeren Steuerhülse 24 verbunden ist, wird die Drehbewegung auf die äußere Steuerhülse 24 übertragen. Weiterhin zeigt Fig. 4, dass in der äußeren Steuerhülse 24 eine Nut 65 vorgesehen ist, in die ein Haltebolzen 66 hineinragt, der fest mit der Ausgangswelle 28 verbunden ist. Diese Nut 65 bewirkt, dass die äußere Steuerhülse 26 in axialer Richtung gehalten ist, sich aber dennoch drehen kann.

Die Figuren 1 und 2 zeigen weiterhin einen externen Antrieb, ausgeführt als Elektromotor 50, der über einen Hebel 52 mit der Koppelhülse 26 verbunden ist. Im gezeigten Ausführungsbeispiel ist der Hebel 52 gabelförmig ausgeführt und nach Art einer Wippe auf Wippenlagern 54 gelagert. Der Hebel 52 ist gabelförmig ausgeführt, von seinen freien Enden greifen Wippenbolzen 56 in eine auf der Außenfläche 38 umlaufend angeordnete Umlaufnut 58. Die Wippenbolzen 56 treiben die Koppelhülse 26 in axialer Richtung an, wobei die Umlaufnut 58 eine Drehbewegung der Koppelhülse bei gleichzeitiger axialer Bewegung ermöglicht. Die Hebelverhältnisse des auf dem oder den Wippenlage(n) 54 gelagerten gabelförmigen Hebels 52 können an die Leistung des Motors und weiterer räumlicher Vorgaben angepasst werden.

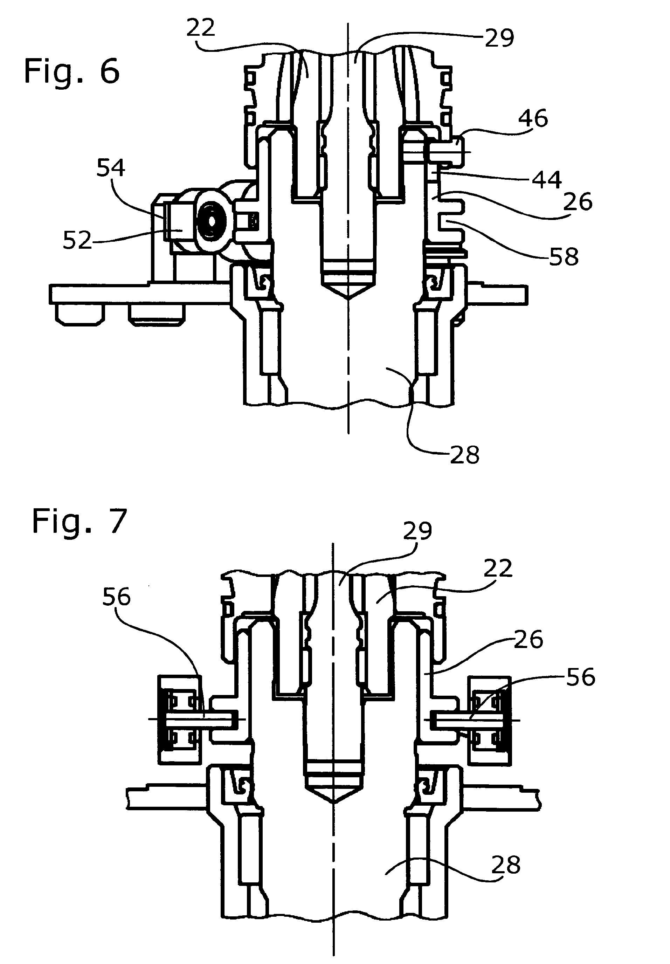

Die Figuren 9 bis 13 zeigen eine erfindungsgemäße Ausführungsvariante, bei der die Koppelhülse 26 selbst als inneres Steuerelement wirkt. In diesem Fall sind die Steuernuten 32, 36 umlaufend angeordnet, wobei die zweiten Steuernuten 36 unmittelbar in die Außenfläche 38 der Koppelhülse 26 eingelassen sind. Nicht gezeigt ist eine Vorrichtung zur Anlenkung des Hebels 52 an die Koppelhülse 26. Die Figuren 6 und 7 verdeutlichen die Außenfläche 38 der Koppelhülse 26, insbesondere den Verlauf der Schrägnut 40 und der Längsnut 44.

Die Befestigung der äußeren Steuerhülse 24 an der Ausgangswelle 28 erfolgt im gezeigten Ausführungsbeispiel über einen Bolzen 30.

Aus Fig. 11 wird das Zusammenwirken der Steuernuten 32, 36 deutlich. Die gezeigte linke erste Steuernut 32L ist verschlossen, während sich die rechte erste Steuernut 32R in Deckung mit einer zweiten Steuernut 36 befindet. Weiterhin sind Steuerkanten 48 erkennbar, die ein bestimmtes gewünschtes Lenkunterstützungsverhalten gewährleisten sollen. Dieses Unterstützungsverhalten wird durch die Abschrägung der Steuerkanten 48 erreicht.

Figur 12 zeigt eine erfindungsgemäße Möglichkeit zur Gewährleistung der Lenkfähigkeit des Fahrzeugs bei Fehlfunktionen. Gezeigt ist ein Ventil 60, das zwischen dem Servoventil 20 und einem Zylinder 62 zur Lenkunterstützung angeordnet ist. Das gezeigte Ventil 60 wirkt als Vier-/Zweiwegeventil, obwohl es als Vier-/Dreiwegeventil gezeichnet ist. Die Mittelposition dient lediglich dazu, ein vollständiges Blockieren der Lenkung während der Schaltbewegung zu verhindern und kann nicht gezielt angesteuert werden. Das Ventil 60 ist über ein Federelement 64 federbelastet ausgeführt.

Bei Wegfall der Bordspannung stellt sich das Ventil 60 selbständig aufgrund des integrierten Federelements 64 in die Grundstellung zurück. Ein Auslösen des Ventils 60 über einen nicht gezeigten Schalter kann ebenfalls sinnvoll sein. Wird das Ventil 60 spannungsfrei geschaltet, erfolgt eine hydraulische Entkopplung der Ventilausgänge vom Zylinder 62. Somit ist eine Weiterfahrt mit neutralem Lenkdrehmoment möglich, was einem Lenkgefühl einer manuellen Lenkung entspricht.

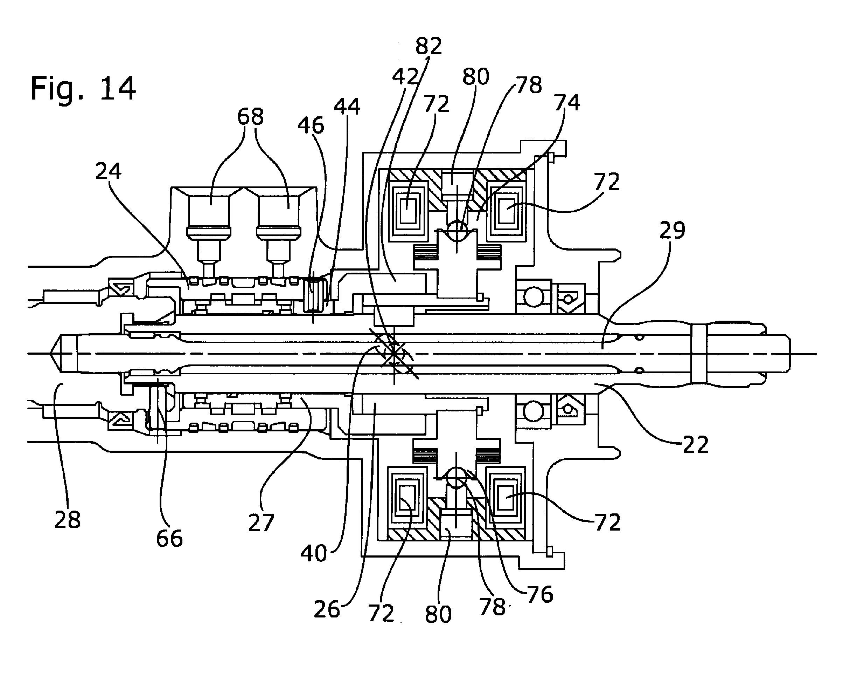

Die Figuren 14 und 15 verdeutlichen eine vorteilhafte weitere Ausführungsvariante der Erfindung. Auch bei dieser Ausführungsform sind die Steuernuten 32, 36 umlaufend angeordnet. Im Gegensatz zu den zuvorigen Figuren sind hier Anschlüsse 68 für Ölleitungen gezeigt. In diesem Ausführungsbeispiel weist die Koppelhülse 26 ein Druckelement 42 auf, welches in eine Schrägnut 40 hineinragt, die sich in der inneren Steuerhülse 27 befindet. Die äussere Steuerhülse 24 ist über das Führungselement 46 mit der inneren Steuerhülse 27 verbunden, wobei das Führungselement 46 in eine Längsnut 44 hineinragt, die Ausgangswelle 28 ist über einen Haltebolzen 66 mit der Steuerhülse 24 verbunden. Eine Passfeder 82 ist derart angeordnet, dass sowohl eine Drehmomentübertragung als auch eine axiale Verschiebung der Koppelhülse 26 möglich ist.

Wird die Eingangswelle 22 gedreht, wird das Drehmoment über einen Torsionsstab 29 auf die Ausgangswelle 28 übertragen. Durch die Drehmomentübertragung des Torsionsstabes 29 erfolgt eine Verdrehung desselben und damit der Eingangswelle 22 gegenüber der Ausgangswelle 28. Durch das Verdrehen der Eingangswelle 22 wird ein Drehmoment über eine Passfeder 82 auf die Koppelhülse 26 übertragen. Durch das Zusammenspiel des Druckelementes 42 in der Koppelhülse 26 welches sich in der Schrägnut 40 bewegt sowie der Längsnut 44 in der inneren Steuerhülse 27 in welchem sich das Druckelemt 46 bewegt, wird eine axiale Verschiebung der inneren Steuerhülse 27 bewirkt.

Durch bestromte, ringförmig angeordneten Elektromagneten 72 und einen ringförmigen Dauermagnet 74 kann die Koppelhülse 26 axial verschoben werden, sind die Elektromagneten nicht bestromt, ist ein Normalbetrieb des Servoventils 20 möglich.

Wird die Koppelhülse 26 verschoben, wird eine axiale Kraft über das Druckelement 42 und der Schrägnut 40 auf die innere Steuerhülse 27 übertragen. Die Schrägnut 40 ist erfindungsgemäß selbsthemmend ausgeführt, dadurch wird bei einer axialen Bewegung der Koppelhülse 26 keine Rotation der inneren Steuerhülse hervorgerufen, dagegen bei einer Rotation der Koppelhülse 26 eine axiale Verschiebung der inneren Steuerhülse 27 bewirkt.

Erfindungsgemäß ist auch eine Vorrichtung zur Selbstzentrierung des Servoventils 20 vorgesehen. Zu diesem Zweck ist im Bereich des Dauermagneten 74 umlaufend eine Kugelbahn 76 vorgesehen, in der Kugeln 78 laufen. Über Federelemente 80 werden die Kugeln 78 mit einer Kraft in Richtung des Dauermagneten 74 beaufschlagt. Figur 15 zeigt eine Schnittdarstellung durch das Servoventil 20 im Bereich der Federelemente 80. Die Kraft der Federelemente 80 bestimmt dabei die Rückstellkraft für eine axiale Zentrierung der Koppelhülse 26. Weiterhin ist die Zentrierungskraft auch vom Profil der Kugelbahn 76 abhängig, in der die Kugeln 78 in axialer Richtung gehalten bzw. verschoben werden.

Die Erfindung ist nicht auf die gezeigten Ausführungsbeispiele beschränkt, vielmehr sind auch weitere Ausführungsmöglichkeiten denkbar. Insbesondere ist das Servoventil 20 mit einem nicht dargestellten Lenkmomentantrieb verbindbar, der ein manuelles, sonst durch einen Fahrer aufgebrachtes Drehmoment ersetzt. Eine solche Unterstützung kann beispielsweise an dem Druckelement 42 angreifen, denkbar ist aber auch hier jede andere Verbindung mit insbesondere der Koppelhülse 26. Es müssten lediglich konstruktive Anpassungen vorgenommen werden.

Das Servoventil ermöglicht also eine Funktionalität, die üblicherweise mit hydraulischen Servolenkungen kaum erreichbar ist. Eine Realisierung einer so genannten Einparkhilfe ist problemlos möglich.

Erfindungsgemäß sind in Verbindung mit entsprechenden Steuerungselementen (ECU) und einer geeigneten Software über Momentenüberlegungen zum Beispiel folgende Funktionen einfach zu realisieren:
- Spurhalteassistent
- Über-/Untersteuerungsassistent
- Haptischer Feedback
- Variable Lenkunterstützung (z.B. in Abhängigkeit von Fahrzeuggeschwindigkeit oder Beladung).

## Patentansprüche

1. Servoventil (20) für eine hydraulische Servolenkung von Kraftfahrzeugen mit einer Eingangswelle (22) und einer Ausgangswelle (28), jeweils um eine gemeinsame Längsachse (X-X) drehbar, und mindestens zwei Ventilelementen, nämlich
- einer röhrenförmigen äußeren Steuerhülse (24), die mit der Ausgangswelle (28) verbunden ist und in ihrer Innenfläche (34) erste Steuernuten (32) aufweist,
- einem innerhalb der äußeren Steuerhülse (24) und koaxial zu dieser ausgerichteten inneren Steuerelement, das mit der Eingangswelle (22) verbunden ist und auf seiner Außenfläche zweite Steuernuten (36) aufweist, die mit den ersten Steuernuten (32) der äußeren Steuerhülse (24) in Deckung bringbar sind,
- wobei eine Koppelhülse (26) vorgesehen ist,
- die axial verschiebbar und um die Längsachse (X-X) drehbar ist,
- deren Bewegung durch Kontakt mit mindestens einem der Ventilelemente eine Relativverschiebung der Steuernuten (32, 36) der äußeren Steuerhülse (24) und des inneren Steuerelements zueinander bewirkt,
- deren Bewegung in axialer Richtung von einem externen Antriebsmittel bewirkt wird,
**dadurch gekennzeichnet, dass**
- das innere Steuerelement durch die Koppelhülse (26) selbst gebildet ist,
- die Steuernuten (32, 36) im Wesentlichen in umlaufender Richtung um die Längsachse (X-X) verlaufen,
- die Koppelhülse (26) drehfest mit der äußeren Steuerhülse (24) verbunden ist, so dass eine Verdrehung der Koppelhülse (26) eine Verdrehung der äußeren Steuerhülse (24) bewirkt
- die Koppelhülse (26) über einen Hebel von dem Antriebsmittel in axialer Richtung verschiebbar ist.

2. Servoventil (20) nach Anspruch 1, **dadurch gekennzeichnet, dass** die Koppelhülse (26) aufweist:
- eine Schrägnut (40), in die ein Druckelement (42) hineinragt, das fest mit der Eingangswelle (22) verbunden ist, und
- eine axial verlaufende Längsnut (44), in die ein Führungselement (46) hineinragt, das fest mit der äußeren Steuerhülse (24) verbunden ist.

3. Servoventil (20) nach Anspruch 2, **dadurch gekennzeichnet, dass** die Schrägnut (40) einen Steigungswinkel (α) von etwa 10° bis 45°, bezogen auf die Längsachse (X-X) aufweist.

4. Servoventil (20) nach Anspruch 3, **dadurch gekennzeichnet, dass** der Steigungswinkel (α) etwa 45° beträgt.

5. Servoventil (20) nach einem der Ansprüche 1 bis 4, **dadurch gekennzeichnet, dass** die Koppelhülse (26) von einem Elektromotor (50) in axialer Richtung verschiebbar ist.

6. Servoventil (20) nach Anspruch 5, **dadurch gekennzeichnet, dass** die Koppelhülse (26) über einen gabelförmige Hebel (52), der schwenkbar auf einem Wippenlager (54) gelagert ist, mit dem Elektromotor (50) verbunden ist, wobei freie Gabelenden jeweils einen Wippenbolzen (56) aufweisen, die in einer Umlaufnut (58)der Koppelhülse(26) laufen.

7. Servoventil (20) nach einem der Ansprüche 1 bis 6, **gekennzeichnet durch** ein Ventil (60), das zwischen einem Zylinder (62) einer Lenkunterstützung und dem Servoventil (20) angeordnet ist und eine hydraulischen Entkopplung des Servoventils (20) vom Zylinder (62) ermöglicht.

8. Servoventil (20) nach Anspruch 7, **dadurch gekennzeichnet, dass** das Ventil (60) als 4/2-Wege Ventil ausgeführt ist.

## Claims

1. Servo valve (20) for a hydraulic servo steering system for motor vehicles, comprising an input shaft (22) and an output shaft (28), each rotatable about a common longitudinal axis (X-X), and at least two valve members, namely
- a tubular outer control sleeve (24) which is connected to the output shaft (28) and comprises first control grooves (32) in its inner surface (34),
- an inner control member which is aligned within the outer control sleeve (24) and coaxially therewith, and which is connected to the input shaft (22) and comprises on its outer surface two control grooves (36) that can be made to coincide with the first control grooves (32) of the outer control sleeve (24),
- wherein a coupling sleeve (26) is provided,
- which can be axially displaced and rotated about the longitudinal axis (X-X),
- the movement of which causes, by contact with at least one of the valve members, a relative movement of the control grooves (32, 36) of the outer control sleeve (24) and of the inner control member relative to each other,
- the movement of which in the axial direction is caused by an external driving means,
**characterised in that**
- the inner control member is formed by the coupling sleeve (26) itself,
- the control grooves (32, 36) substantially extend in the peripheral direction around the longitudinal axis (X-X),
- the coupling sleeve (26) is non-rotatably connected to the outer control sleeve (24), so that a rotation of the coupling sleeve (26) causes a rotation of the outer control sleeve (24),
- the coupling sleeve (26) is can be displaced in the axial direction by the driving means through a lever.

2. Servo valve (20) according to claim 1, **characterised in that** the coupling sleeve comprises (26):
- an inclined groove (40) into which a pressure member (42) protrudes that is firmly connected to the input shaft (22), and
- an axially extending longitudinal groove (44) into which a guide member (46) protrudes that is firmly connected to the outer control sleeve (24).

3. Servo valve (20) according to claim 2, **characterised in that** the inclined groove (40) has an angle of gradient (α) of about 10° to 45° in relation to the longitudinal axis (X-X).

4. Servo valve (20) according to claim 3, **characterised in that** the angle of gradient (α) is about 45°.

5. Servo valve (20) according to any one of the claims 1 to 4, **characterised in that** the coupling sleeve (26) can be displaced by an electric motor (50) in the axial direction.

6. Servo valve (20) according to claim 5, **characterised in that** the coupling sleeve (26) is connected to the electric motor (50) via a fork-shaped lever (52) pivotably supported on a rocker bearing (54), wherein free fork ends each comprise a rocker bolt (56) running in a peripheral groove (58) of the coupling sleeve (26).

7. Servo valve (20) according to any one of the claims 1 to 6, **characterised by** a valve (60) which is disposed between a cylinder (62) of a power steering system and the servo valve (20) and which enables a hydraulic uncoupling of the servo valve (20) from the cylinder (62).

8. Servo valve (20) according to claim 7, **characterised in that** the valve (60) is designed as a 4/2 way valve.

## Revendications

1. Servovalve (20) pour une direction assistée hydraulique de véhicules automobiles, comprenant un arbre d'entrée (22) et un arbre de sortie (28) tournant chacun autour d'un axe longitudinal (X-X) commun, et au moins deux éléments vannes, à savoir
- un manchon de commande extérieur tubulaire (24) qui est relié à l'arbre de sortie (28) et présente de premières rainures de commande (32) dans sa face intérieure (34),
- un élément intérieur de commande qui est agencé à l'intérieur dudit manchon extérieur de commande (24) et de façon coaxiale à celui-ci et qui est relié à l'arbre d'entrée (22) et présente de secondes rainures de commande (36) sur sa face extérieure qui peuvent être mises en coïncidence avec lesdites premières rainures de commande (32) du manchon extérieur de commande (24),
- un manchon de couplage (26) étant prévu
- qui est axialement déplaçable et apte à tourner autour de l'axe longitudinal (X-X),
- dont le mouvement provoque, par contact avec au moins un desdits éléments vannes, une translation relative, les unes par rapport aux autres, des rainures de commande (32, 36) dudit manchon extérieur de commande (24) et dudit élément intérieur de commande,
- dont le mouvement dans la direction axiale est provoqué par un moyen externe d'entraînement,
**caractérisée par le fait que**
- ledit élément intérieur de commande est constitué par ledit manchon de couplage (26) même,
- lesdites rainures de commande (32, 36) s'étendent pour l'essentiel dans la direction périphérique autour de l'axe longitudinal (X-X),
- ledit manchon de couplage (26) est solidaire en rotation dudit manchon extérieur de commande (24) de sorte qu'une rotation du manchon de couplage (26) provoque une rotation dudit manchon extérieur de commande (24),
- ledit manchon de couplage (26) est apte à être déplacé dans la direction axiale au moyen d'un levier par ledit moyen d'entraînement.

2. Servovalve (20) selon la revendication 1, **caractérisée par le fait que** ledit manchon de couplage (26) comprend :
- une rainure oblique (40) dans laquelle se projette un élément de pression (42) qui est solidaire de l'arbre d'entrée (22) et
- une rainure longitudinale (44) s'étendant axialement dans laquelle se projette un élément de guidage (46) qui est solidaire du manchon extérieur de commande (24).

3. Servovalve (20) selon la revendication 2, **caractérisée par le fait que** ladite rainure oblique (40) présente un angle d'inclinaison (α) par rapport à l'axe longitudinal (X-X) qui est compris entre environ 10° et 45°.

4. Servovalve (20) selon la revendication 3, **caractérisée par le fait que** ledit angle d'inclinaison (α) est de 45° à peu près.

5. Servovalve (20) selon l'une quelconque des revendications 1 à 4, **caractérisée par le fait que** ledit manchon de couplage (26) est déplaçable dans la direction axiale par l'intermédiaire d'un moteur électrique (50).

6. Servovalve (20) selon la revendication 5, **caractérisée par le fait que** ledit manchon de couplage (26) est relié au moteur électrique (50) via un levier en fourchette (52) qui est logé à pivotement sur un appui-bascule (54), des extrémités libres de fourchette présentant chacune un boulon-bascule (56) qui se déplacent dans une rainure périphérique (58) dudit manchon de couplage (26).

7. Servovalve (20) selon l'une quelconque des revendications 1 à 6, **caractérisée par** une vanne (60) qui est agencée entre un cylindre (62) d'une direction assistée et ladite servovalve (20) et qui permet de découpler hydrauliquement ladite servovalve (20) dudit cylindre (62).

8. Servovalve (20) selon la revendication 7, **caractérisée par le fait que** ladite vanne (60) est réalisée sous forme d'une vanne 4/2 voies.
